# EUROPÄISCHE PATENTSCHRIFT

(11) **EP 2 635 827 B1**
(45) Veröffentlichungstag und Bekanntmachung des Hinweises auf die Patenterteilung: **08.07.2015**
(21) Anmeldenummer: 11833586.8
(22) Anmeldetag: 03.11.2011
(51) Int. Cl.: F16J 1/16

(54) **HYBRIDBOLZEN ZUR VERBINDUNG EINES KOLBENS FÜR EINEN VERBRENNUNGSMOTOR MIT EINEM PLEUEL UND PRESSVORRICHTUNG ZUR HERSTELLUNG DES HYBRIDBOLZENS**
HYBRID PIN FOR CONNECTING A PISTON FOR AN INTERNAL COMBUSTION ENGINE TO A PISTON ROD, AND PRESSING DEVICE FOR PRODUCING THE HYBRID PIN
GOUPILLE HYBRIDE POUR RELIER UN PISTON POUR MOTEUR À COMBUSTION À UNE BIELLE ET DISPOSITIF À PRESSER POUR LA FABRICATION DE CETTE GOUPILLE HYBRIDE

(30) Priorität: 05.11.2010 DE 102010050345
(43) Veröffentlichungstag der Anmeldung: 11.09.2013
(73) Patentinhaber: MAHLE International GmbH, 70376 Stuttgart (DE)
(72) Erfinder: LOCHMANN, Roland, 71672 Marbach (DE); BISCHOFBERGER, Ulrich, 73732 Esslingen (DE)
(74) Vertreter: Jooß, Martin
(86) Internationale Anmeldenummer: PCT/DE2011/001928
(87) Internationale Veröffentlichungsnummer: WO 2012/083909

(56) Entgegenhaltungen:
- WO-A1-2006/110930
- US-A- 1 670 564

## Beschreibung

Die Erfindung betrifft einen Hybridbolzen zur Verbindung eines Kolbens für einen Verbrennungsmotor mit einem Pleuel, wobei der Hybridbolzen aus einer Hülse aus Stahl und aus einem in die Hülse eingepressten Kern aus einer kalt umformbaren Leichtmetalllegierung besteht. Die Erfindung betrifft weiterhin eine Pressvorrichtung zur Herstellung des Hybridbolzens bestehend aus einer Matrize zur Aufnahme der Hülse mit-dem in die Hülse eingeschobenen Kern, aus einem mit der einen Seite des Kerns in Kontakt stehenden Stempel und aus einem mit der anderen Seite des Kerns in Kontakt stehenden Pressstempel.

Ein Hybridbolzen und eine Pressvorrichtung der eingangs genannten Art sind aus dem US-Patent 1,670,564 bekannt. Nachteilig ist hierbei, dass der Kern des bekannten Hybridbolzens in der Hülse gegen ein Verschieben Insbesondere wegen elastischer Formveränderungen in axialer Richtung nicht gesichert ist, sodass sich hierbei keine axialen Pressverbundspannungen aufbauen können, die zu einer Verbesserung der Festigkeit das Hybridbolzen führen.

Es ist demgemäß Aufgabe der vorliegenden Erfindung, den genannten Nachteil zu vermeiden, und einen Hybridbolzen mit verbesserter Festigkeit zu schaffen, bei dem der Kern gegen axiale Formveränderungen gesichert ist, sodass sich axiale Pressverbundspannungen aufbauen können, die zu einer Verbesserung der Festigkeit des Hybridbolzens führen.

Gelöst wird diese Aufgabe mit den im Kennzeichen des Hauptanspruches und der Nebenansprüche stehenden Merkmalen.

Weitere vorteilhafte Ausgestaltungen der Erfindung sind Gegenstand der Unteransprüche.

Hierbei sorgt das Innenprofil der Hülse dafür, das der in die Hülse eingeschobene Kern gegen axiales Verschieben gesichert ist, dass hierdurch die Pressverbundspannung im Kern und in der Hülse erhalten bleiben, und dass dadurch der Hybridbolzen gemäß der Erfindung eine große Festigkeit erhält.

Einige Ausführungsbeispiele der Erfindung werden im Folgenden anhand der Zeichnungen beschrieben. Es zeigen
- Fig. 1: eine Pressvorrichtung zum Einpressen eines Leichtmetallkerns in eine Stahlhülse zur Herstellung einer Hybridbolzens,
- Fig. 2a bis 2f: Ausgestaltungen der Stahlhülsen,
- Fig. 3: eine Ausgestaltung der Pressvorrichtung mit einer zweiteiligen Matrize, deren Innenraum eine mittige Ausbauchung aufweist und
- Fig. 4a bis 4g: Ausgestaltungen der mit den Pressvorrichtungen herstellbaren Hybridbolzen.

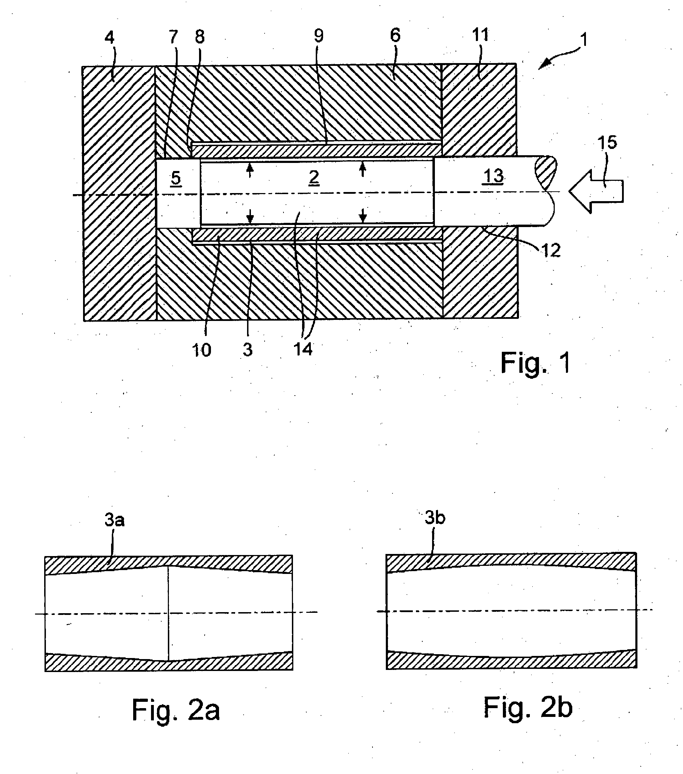

Fig. 1 zeigt eine Pressvorrichtung 1 zum Einpressen eines Kerns 2 aus einer Aluminium-Knetlegierung in eine Hülse 3 aus Stahl zur Herstellung eines aus dem Kern 2 und der Hülse 3 bestehenden Hybridbolzens 14. Die Pressvorrichtung 1 weist eine starr gelagerte Abstützung 4 mit einem daran befestigten Stempel 5 auf, dessen Außendurchmesser dem Innendurchmesser der Hülse 3 insoweit entspricht, dass die Hülse 3 leicht auf den Stempel 5 aufschiebbar ist.

Weiterhin weist die Pressvorrichtung 1 eine rohrförmige Matrize 6 auf, deren Innenraum in einem kurzen Bereich 7 auf der einen (hier der linken) Seite einen Innendurchmesser aufweist, der dem Außendurchmesser des Stempels 5 insoweit entspricht, dass die Matrize 6 über diesen Bereich 7 auf den Stempel 5 aufgeschoben werden kann. Die axiale Länge des Bereichs 7 ist um ein solches Maß kleiner als die axiale Länge des Stempels 5, um welches der Kern 2 auf einer Seite kürzer ist als die Hülse 5.

Auf der der Abstützung 4 abgewandten Seite geht der Bereich 7 über in eine stufenförmige Erweiterung 8 des Innenraums 9 der Matrize 6, wobei der Innenradius des Innenraums 9 der Matrize 6 insoweit vergrößert ist, dass er größer als der Außenradius der Hülse 3 ist, und dass sich dann, wenn die Matrize 6 und die Hülse 3 auf dem Stempel 5 aufgeschoben sind, zwischen dem Außenmantel der Hülse 3 und dem Innenraum 9 der Matrize 6 ein kleiner Luftspalt 10 ergibt, dessen Dimension und Funktion weiter unten näher erläutert werden. Hierbei entspricht die axiale Länge des radial vergrößerten Bereichs des Innenraums 9 der axialen Länge der Hülse 3.

Auf der der Abstützung 4 abgewandten Seite kann die Pressvorrichtung 1 von einer Abdeckplatte 11 verschlossen sein, die mittig eine Öffnung 12 aufweist, durch die ein Pressstempel 13 geschoben werden kann.

Der Kern 2 besteht aus einer kaltumformbaren Leichtmetalllegierung, die im vorliegenden Ausführungsbeispiel eine Aluminium-Knetlegierung ist, die neben Aluminium 1,9 bis 2,7 Massenprozent Kupfer, 1,3 bis 1,8 Massenprozent Magnesium und 0,9 bis 1,3 Massenprozent Eisen enthält. Diese Legierung ist warm aushärtbar, wobei das Warmaushärten vor oder nach dem Einpressen des Kerns 2 in die Hülse 3 erfolgen kann. Verwendbar sind hier auch andere kalt umformbare Leichtmetalllegierungen, die vorzugsweise warm aushärtbar sein sollten. So kann die Leichtmetalllegierung auch eine Titan-Knetlegierung sein.

Die Hülse 3 kann aus Nitrierstahl bestehen, das heißt aus Stahl, der gemäß DIN 17211 unter anderen mit den Elementen Chrom, Molybdän und Aluminium legiert ist. Da diese Elemente gute Nitridbildner sind, erhält der Stahl nach dem Nitrieren eine sehr hohe Oberflächenhärte mit einer guten Verschleißfestigkeit.

Die Hülse 3 kann aber auch aus einem Einsatzstahl oder aus einem Vergütungsstahl bestehen, wobei diese Stahlsorten ebenfalls eine große Oberflächenhärte und eine große Verschleißfestigkeit aufweisen. Eine weitere Verbesserung der Oberflächenhärte kann durch eine DLC(diamond-like carbon)-Beschichtung erreicht werden.

Der Stahl der Hülse 3 kann bereits beim Einbau gehärtet sein, kann aber auch erst nach dem Einbau gehärtet werden, wobei sich das Verfahren des Induktionshärtens anbietet. Hergestellt wird die Hülse 3 durch Drehen.

Bei der Montage der Pressvorrichtung 1 wird zunächst die Matrize 6 auf den Stempel 5 geschoben, und anschließend die Hülse 3 in den Innenraum 9 der Matrize 6 eingeführt und dabei auf den Teil des Stempels 5 geschoben, der in den radial vergrößerten Bereich des Innenraums 9 der Matrize 6 ragt. Anschließend wird der Kern 2 in den Innenraum der Hülse 3 geschoben, die Abdeckplatte 11 auf der Matrize 6 befestigt und der Pressstempel 13 in die Öffnung 12 der Abdeckplatte 11 geschoben.

Wird nun Druck vom Pressstempel 13 in Richtung des Pfeiles 15 auf den Kern 2 ausgeübt, sorgt der Stempel 5 dafür, dass von beiden Seiten Druck auf den Kern 2 ausgeübt wird, sodass sich die axiale Länge des Kerns 2 verringert, und der Kern 2, etwas kürzer als die Hülse 3 wird, wobei sich der Kern 2 gleichmäßig in Richtung Hülse 3, das heißt, radial aufweitet. Da der Kern 2 hierbei nicht erwärmt wird, handelt es sich um einen Kaltfließprozess, der bei Raumtemperatur stattfinden kann und allgemein bei Temperaturen unter 200 °C stattfindet. Dieser Prozess hat der Vorteil, dass er preisgünstiger als andere Fließprözesse ist. Darüber hinaus bleiben beim Kaltfließpressen weiter unten näher erläuterte Pressverbundspannungen im Kern 2 und in der Hülse 3 eher erhalten, als wenn ein Heißpressverfahren zur Herstellung des Hybridbolzens 14 angewandt würde, da durch Heißpressen innere Spannungen reduziert werden.

Die radiale Aufweitung des Kerns 2 bewirkt eine radiale Aufweitung der Hülse 3, was Dank des Luftspaltes 10 zwischen der Hülse 3 und der Matrize 6 möglich ist. Lässt nach dem Pressvorgang der Druck des Pressstempels 13 auf den Kern 2 nach, schrumpft die Hülse 3, und es ergibt sich ein Pressverband zwischen Kern 2 und Hülse 3. Dies erzeugt Zugspannungen in der Hülse 3 und Druckspannungen im Kern 2, wodurch sich im Kern 2 und in der Hülse 3 Pressverbundspannungen ergeben, die die Belastbarkeit des Hybridbolzens 14 vergrößern. Diese Pressverbundspannungen bewirken zudem eine Kaltverfestigung des Kerns 2 aufgrund molekularer Vorgänge im Material des Kerns 2, was eine weitere Vergrößerung der Beanspruchbarkeit des Hybridbolzens 14 bewirkt.

In den Figuren 2a bis 2h sind Ausgestaltungen 3a bis 3i der Hülse 3 dargestellt, die unterschiedliche Innenprofile aufweisen. Da der Kern 2 beim Einpressen in die Hülse 3 in axialer Richtung verkürzt wird, ist es zur Erhöhung der Pressverbundspannungen im Kern 2 und damit zu einer weiteren Verbesserung der Festigkeit des Hybridbolzens 14 erstrebenswert, dass sich nach Beendigung der axialen Druckeinwirkung auf den Kern 2 dieser aufgrund seiner Elastizität nicht wieder verlängert, das heißt, dass die Verkürzung des Kerns 2 erhalten bleibt. Diesem Zweck dient die Innenprofilierung der Hülsen 3a bis 3h.

Die Innenräume der in Fig. 2a und 2b dargestellten Hülsen 3a und 3b weisen jeweils eine über ihre gesamte Länge reichende, umlaufende Ausbauchung auf, wobei die Dicke der Wand der Hülsen 3a und 3b gemäß Fig. 2a und 2b in der Mitte am geringsten ist, bei der Hülse 3a zu den beiden Enden der Hülse 3a hin linear zunimmt, und bei der Hülse 3b zu den beiden Enden der Hülse 3b hin im Schnitt bogenförmig zunimmt.

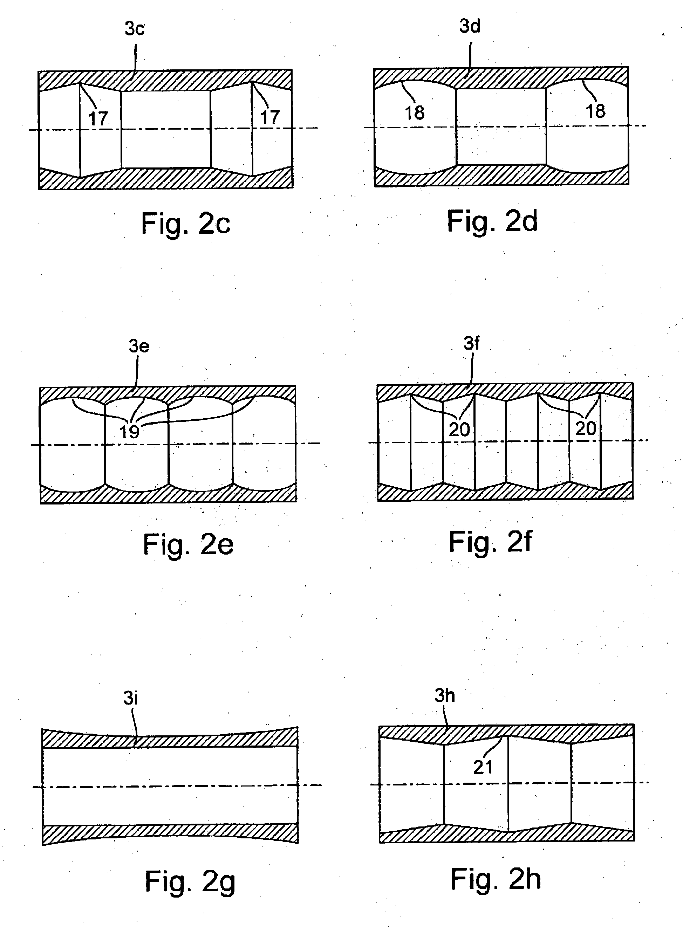

Die Hülsen 3c und 3d gemäß den Fig. 2c und 2d haben in der Mitte einen kreiszylindrischen Innenraum, der an seinen beiden Enden umlaufende Ausbauchungen 17, 18 aufweist, wobei die Ausbauchungen 17 der Hülse 3c jeweils eine Mitte haben, von der aus die Ausbauchungen 17 zu beiden Seiten hin linear abnehmen, während die Ausbauchungen 18 der Hülse 3d im Schnitt kreissegmentförmig sind.

Die Innenräume der in den Fig. 2e und 2f dargestellten Hülsen 3e und 3f weisen über ihre gesamte axiale Länge vorzugsweise gleichmäßig verteilte, umlaufende Ausbauchungen 19, 20 auf, wobei die Ausbauchungen 19 der Hülse 3e im Schnitt kreisbogenförmig sind, und die Ausbauchungen 20 der Hülse 3f jeweils eine Mitte aufweisen, von der die Ausbauchungen 20 zu beiden Seiten hin linear abnehmen.

Der Innenraum der Hülse 3h gemäß Fig. 2h weist eine mittig liegende Ausbauchung 21 auf, die eine Mitte aufweist, von der die Ausbauchung 21 zu beiden Seiten hin linear abnimmt. Diese Ausbauchung 21 endet beidseitig in einem Abstand von den Enden der Hülse 3h. Beidseitig der Ausbauchung 21 nimmt der Innendurchmesser der Hülse 3h bis zu den jeweiligen Enden der Hülse 3h linear zu, was heißt, dass die Wandstärke der Hülse 3h in den beiden Endbereichen der Hülse 3h abnimmt, was den Vorteil mit sich bringt, dass hierdurch das Gewicht der Hülse reduziert ist.

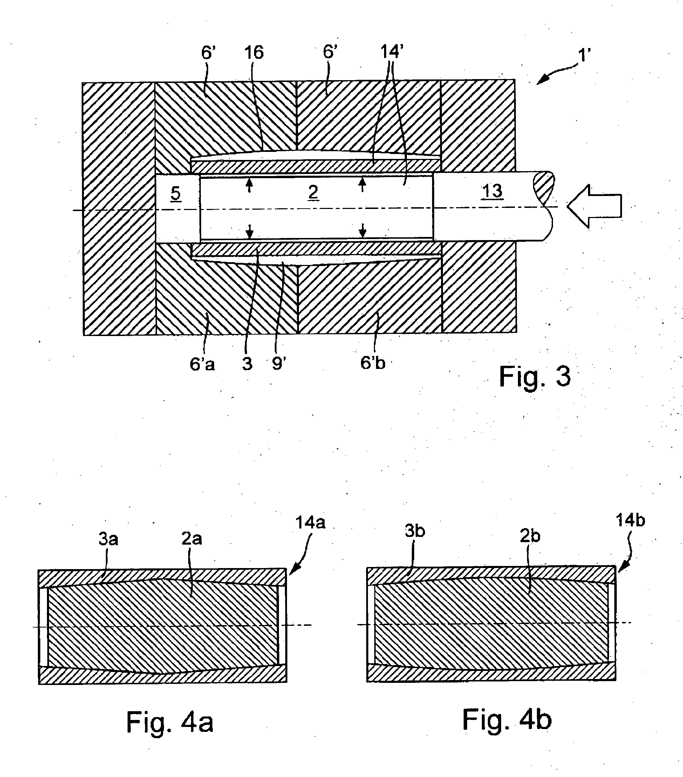

Die in Fig. 2g dargestellte Hülse 3i hat einen kreiszylindrischen Innenraum ohne Profilierung, hat aber eine Außenfläche, die im Schnitt konkav ausgebildet ist. Im Rahmen des Pressvorgangs baucht sich der mittlere Teil der Hülse insoweit auf, dass die Hülse die Form der in Fig. 2b dargestellten Hülse 3b mit kreiszylindrischer Außenfläche und einer zentral liegenden, umlaufende Ausbauchung mit im Schnitt kreissegmentförmiger Form annimmt, sodass sich ein Hybridbolzen 14b ergibt, wie er in Fig. 4b dargestellt ist, dessen Form aufgrund der Pressverbundspannungen im Kern 2b und in der Hülse 3i, 3b auch nach Nachlassen des Drucks des Pressstempels 13 erhalten bleibt.

Möglich aber in den Figuren nicht dargestellt ist auch, das Innenprofil der Hülse 3 spiralförmig auszubilden. Ein derartiges Profil wird in die Hülseninnenfläche eingedreht.

Eine weitere, in den Figuren nicht dargestellte Möglichkeit, besteht darin, die Hülseninnenfläche mit einer Suspension zu beschichten, die ein axiales Verschieben des Kerns 2 in der Hülse 3 verhindert. Diese Suspension weist feinstverteilte Partikel mit einer Größe im µm-Bereich aus einem harten. Material auf, das Diamantpulver, Quarzsand oder SiO2-Pulver sein kann. Die Suspension wird auf die Hütseninnenfläche aufgesprüht. Möglich ist hierbei auch, die Hülseninnenfläche mit einer dünnen Folie zu belegen, in der obiges Material feinverteilt enthalten ist.

In einer weiteren Ausgestaltung der Erfindung kann zu dem Zweck der Fixierung des Kerns 2 in der Hülse 3 deren Innenfläche aufgeraut sein, wobei die Rauhigkeit im µm-Bereich liegt. Hergestellt werden kann diese Aufrauung durch Riefenbildung, wozu sich die Verfahren des Feindrehens oder des Fräsens eignen.

Weiterhin kann die Hülseninnenfläche in axialer Richtung betrachtet in verschiedenen Abschnitten aufgeteilt sein, die unterschiedlich grob profiliert sind. So können die axial äußeren Abschnitte grob und die axial inneren Abschnitte fein profiliert sein. Da die Überlänge des Kerns 2 gegenüber der Hülse 3 umso größer sein muss, je gröber die Profilierung der Hülseninnenfläche ist, ergibt sich hierdurch der Vorteil, dass durch die feinere Profilierung die Überlänge des Kerns 2 verringert werden kann.

Eine in Fig. 3 dargestellte Ausgestaltung der Pressvorrichtung 1' weist eine aus zwei Matrizenteilen 6'a und 6'b bestehende Kombimatrize 6' auf. Diese Kombimatrize 6' weist zudem eine über ihre gesamte axiale Länge reichende, umlaufende, radiale Ausbauchung 16 des Innenraums 9' auf. Hierdurch wird bewirkt, dass nach dem Einpressen des Kerns 2 in die Hülse 3 und nach der dadurch bewirkten radialen Aufweitung der Hülse 3 der mittlere Teil der Hülse 3 aufgeweitet bleibt, sodass der gesamte Hybridbolzen 14' eine mittige Ausbauchung beibehält, die eine weitere Erhöhung der Festigkeit des Hybridbolzen 14' bewirkt. Diese Verformung des Hybridbolzens 14' bringt die Notwendigkeit mit sich, dass die Kombimatrize 6' zweiteilig ausgebildet ist, wobei die Matrizenhälften 6'a und 6'b auseinandergezogen werden, wenn der Hybridbolzen 14' mit mittiger Ausbauchung der Pressvorrichtung 1' entnommen wird.

Ausgestaltungen der Hybridbuchsen 14' und 14a bis 14f, die mit den Hülsen 3 und 3a bis 3g hergestellt sind, sind in den Figuren 4a bis 4g dargestellt. Durch die Formen der Innenflächen der Hülsen 3a bis 3g sind die Kerne 2a bis 2f an einer Ausdehnung in axialer Richtung gehindert, sodass die Kerne 2a bis 2f an beiden Enden der jeweiligen Hybridbuchsen 14' und 14a bis 14f kürzer sind als die dazugehörigen Hülsen 3 und 3a bis 3g.

Die Hybridbuchse 14' ist in der Pressvorrichtung 1' mit der Kombimatrize 6' hergestellt worden, wobei im vorliegenden Ausführungsbeispiel die Hülse 3 ohne eine Innenprofilierung verwendet wurde. Alleine dadurch, dass die gesamte Hülse 3 in der Kombimatrize 6' durch den Pressvorgang eine mittige Ausbauchung erhält, weist auch die Innenfläche der Hülse 3g in der Hybridbuchse 14' eine über die gesamte axiale Länge der Hülse 3 reichende, umlaufende, radiale Ausbauchung auf, die den betreffenden Kern 2b daran hindert, sich in axialer Richtung auszudehnen.

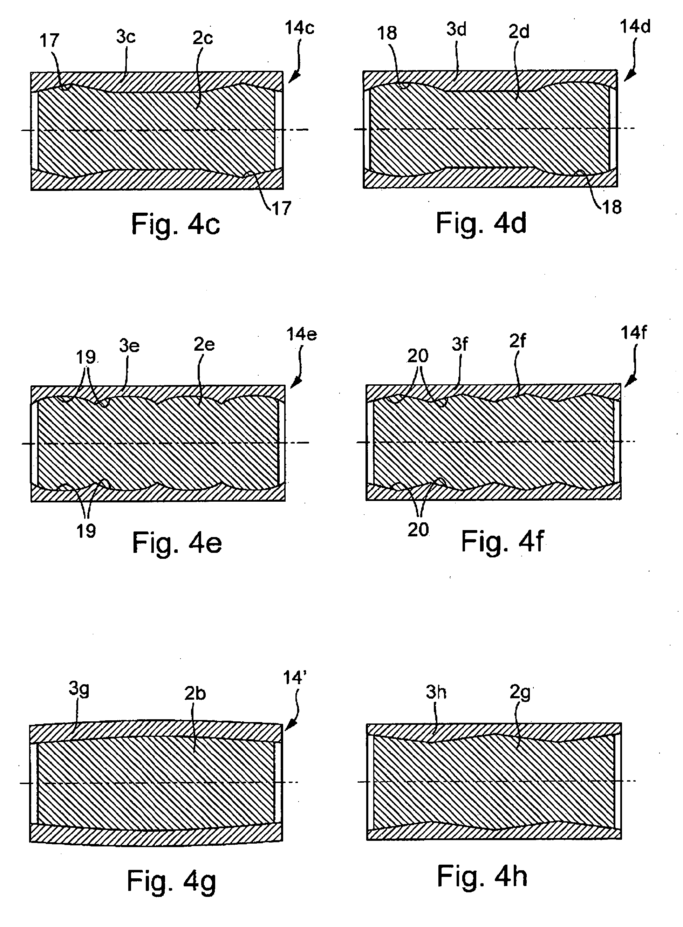

Im Anschluss an den Pressvorgang zur Herstellung der Hybridbuchse 14' gemäß Fig. 4g wird die Außenfläche der Hybridbuchse 14' mittels eines spanabhebenden Fertigungsverfahrens (Drehen, Fräsen) insoweit bearbeitet, dass die Außenfläche der Hybridbuchse 14' eine kreiszylindrische Form und damit die Form der in Fig. 4b dargestellten Hybridbuchse 14b annimmt.

Letztlich wird darauf hingewiesen, dass in den Figuren 2 und 4 die Innenprofile der Hülsen und das Innenprofil der in Fig. 3 dargestellten Kombimatrize 6' nicht maßstabsgerecht gezeichnet sind sondern eine Profiltiefe von nur einigen µm aufweisen. In den vorliegenden Ausführungsbeispielen haben die Innenprofile der Hülsen 3 eine Profiltiefe von 30 µm und hat das Innenprofil der in Fig. 3 dargestellten Kombimatrize eine Profiltiefe von 10 µm.

### Bezugszeichenliste

- 1, 1': Pressvorrichtung
- 2, 2a bis 2g: Kern
- 3, 3a bis 3i: Hülse
- 4: Abstützung
- 5: Stempel
- 6: Matrize
- 6': Kombimatrize
- 6'a, 6'b: Matrizenhälfte
- 7: Bereich des Innenraums 9
- 8: Erweiterung des Innenraums 9
- 9, 9': Innenraum
- 10: Luftspalt
- 11: Abdeckplatte.
- 12: Öffnung
- 13: Pressstempel
- 14, 14', 14a bis 14f: Hybrid bolzen
- 15: Pfeil
- 16,17,18,19,20,21: Ausbauchung

## Patentansprüche

1. Hybridbolzen (14) zur Verbindung eines Kolbens für einen Verbrennungsmotor mit einem Pleuel, wobei der Hybridbolzen (14) aus einer Hülse (3) aus Stahl mit einer kreiszylinderförmigen Außenfläche und aus einem in die Hülse (3) eingepressten Kern (2) aus einer kaltumformbaren Leichfmetalllegierung besteht, **dadurch gekennzeichnet, dass** die Innenfläche der Hülse (3) ein Profil aufweist, bei dem der Innendurchmesser der Hülse (3) zu den beiden Enden der Hülse (3) hin abnimmt, wodurch nach dem Einpressen des Kerns (2) in die Hülse (3) eine elastische Verlängerung des Kerns (3) in axialer Richtung insoweit verhinderbar ist, dass an beiden Enden des Hybridbolzens (14) die Hülsen (3) länger als der Kern (2) ist.

2. Hybridbolzen (14) nach Anspruch 1, **dadurch gekennzeichnet, dass** die Leichtmetalllegierung eine Aluminium-Knetlegierung, die neben Aluminium 1,9 bis 2,7 Massenprozent Kupfer, 1,3 bis 1,8 Massenprozent Magnesium und 0,9 bis 1,3 Massenprozent Eisen enthält, oder eine Titan-Knetlegierung ist.

3. Hybridbolzen (14) nach Anspruch 1 oder 2, **dadurch gekennzeichnet, dass** die Hülse (3) aus Stahl besteht.

4. Hybridbolzen (14) nach Anspruch 3, **dadurch gekennzeichnet, dass** der Stahl ein Nitrierstahl mit Chrom, mit Molybdän und mit Aluminium, ein Einsatzstahl oder ein Vergütungsstahl ist.

5. Hybridbolzen (14a) nach einem der vorhergehenden Ansprüche, **dadurch gekennzeichnet, dass** die Wanddicke der Hülse (3a) in der axialen Mitte der Hülse (3a) am Geringsten ist und zu den beiden Enden der Hülse (3a) hin linear zunimmt, sodass sich eine über die gesamte axiale Länge der Hülse (3a) reichende, radiale, umlaufende Ausbauchung des Innenraums der Hülse (3a) ergibt, die zu den beiden Enden der Hülse (3a) hin linear abnimmt.

6. Hybridbolzen (14b) nach einem der Ansprüche 1 bis 4, **dadurch gekennzeichnet, dass** die Wanddicke der Hülse (3b) in der axialen Mitte der Hülse (3b) am Geringsten ist und zu den beiden Enden der Hülse (3b) hin im Schnitt bogenförmig zunimmt, sodass sich eine über die gesamte axiale Länge der Hülse (3b) reichende, radiale, umlaufende Ausbauchung des Innenraums der Hülse (3b) ergibt, die zu den beiden Enden der Hülse (3b) hin im Schnitt bogenförmig abnimmt.

7. Hybridbolzen (14c) nach einem der Ansprüche 1 bis 4, **dadurch gekennzeichnet, dass** der axial mittlere Teil des Innenraums der Hülse (3c) kreiszylindrisch ausgebildet ist, und dass der Innenraum der Hülse (3c) an seinen beiden Enden umlaufende Ausbauchungen (17) aufweist, die jeweils eine axiale Mitte haben, von der aus die Ausbauchungen (17) zu beiden Seiten hin linear abnehmen.

8. Hybridbolzen (14d) nach einem der Ansprüche 1 bis 4, **dadurch gekennzeichnet, dass** der axial mittlere Teil des Innenraums der Hülse (3d) kreiszylindrisch ausgebildet ist, und dass der Innenraum der Hülse (3d) an seinen beiden Enden umlaufende Ausbauchungen (18) aufweist, die im Schnitt kreissegmentförmig sind.

9. Hybridbolzen (14e) nach einem der Ansprüche 1 bis 4, **dadurch gekennzeichnet, dass** der Innenraum der Hülse (3e) über die gesamte axiale Länge gleichmäßig verteilte, umlaufende und im Schnitt kreisbogenförmige Ausbauchungen (19) aufweist.

10. Hybridbolzen (14f) nach einem der Ansprüche 1 bis 4, **dadurch gekennzeichnet, dass** der Innenraum der Hülse (3f) über die gesamte axiale Länge gleichmäßig verteilte, umlaufende Ausbauchungen (20) aufweist, die jeweils eine axiale Mitte haben, von der aus die Ausbauchungen (20) zu beiden Seiten hin linear abnehmen.

11. Hybridbolzen (14) nach einem der Ansprüche 1 bis 10, **dadurch gekennzeichnet, dass** die Innenfläche der Hülse (3) ein Profil aufweist, das spiralförmig ausgebildet ist

12. Hybridbolzen (14) nach einem der Ansprüche 1 bis 10, **dadurch gekennzeichnet, dass** die Innenfläche der Hülse (3) mit einer Suspension beschichtet ist, wobei die Suspension feinstverteilte Partikel aus Diamantpulver, aus Quarzsand oder aus Si02 mit einer Größe im µm-Bereich aufweist.

13. Hybridbolzen (14) nach einem der Ansprüche 1 bis 10, **dadurch gekennzeichnet, dass** der mittlere Bereich der Hülse (3h) eine Profilierung (21) ausweist.

14. Hybridbolzen (14) nach einem der Ansprüche 1 bis 10, **dadurch gekennzeichnet, dass** die Innenfläche der Hülse (3) aufgeraut ist und eine Rauhigkeit im µm-Bereich aufweist,

15. Pressvorrichtung (1') zur Herstellung eines Hybridbolzen (14') zur Verbindung eines Kolbens für einen Verbrennungsmotor mit einem Pleuel, wobei der Hybridbolzen (14') aus einer Hülse (3g) aus Stahl und aus einem Kern (2b) aus Aluminium besteht, bestehend aus einer Matrize (6') zur Aufnahme der Hülse (3g) mit dem in die Hülse (3g) eingeschobenen Kern (2b), aus einem mit der einen Seite des Kerns (2b) in Kontakt stehenden Stempel (5) und aus einem mit der anderen Seite des Kerns (2b) in Kontakt stehenden Pressstempel (13), **dadurch gekennzeichnet, dass** die Matrize (6') aus zwei in ihrer axialen Mitte teilbaren Matrizenhälften (6'a, 6'b) besteht und einen Innenraum (9') mit einer über seine gesamte axiale Länge reichenden, umlaufenden radialen Ausbauchung (16) aufweist, sodass durch Druck des Pressstempels (13) auf den Kern (2b) sowohl der Kern (2b) in die Hülse (3g) einpressbar als auch der axial mittlere Teil der Hülse (3g) radial aufweitbar ist.

16. Verfahren zur Herstellung eines Hybridbolzen (14') nach einem der Ansprüche 1 bis 14, **dadurch gekennzeichnet, dass** nach dem Pressvorgang sowohl die Außenfläche als auch der Innenraum Hülse (3g) eine über die gesamte axiale Länge der Hülse (3g) reichende, radiale, umlaufende Ausbauchung aufweist, die zu den beiden Enden der Hülse (3g) hin im Schnitt bogenförmig abnimmt, und dass nach einem darauffolgenden spanenden Endbearbeitungsprozess die Hülse (3g) eine kreiszylindrische Außenfläche (3b) aufweist.

## Claims

1. Hybrid pin (14) for connecting a piston for an internal combustion engine to a connecting rod, wherein the hybrid pin (14) consists of a sleeve (3) made of steel with a circular cylindrical outer surface and of a core (2) which is pressed into the sleeve (3) and is made of a cold-formable light metal alloy,
**characterized in that** the inner surface of the sleeve (3) has a profile, in which the internal diameter of the sleeve (3) decreases towards the two ends of the sleeve (3), as a result of which it is possible to prevent elastic elongation of the core (2) in the axial direction, after the core (2) has been pressed into the sleeve (3), to such an extent that the sleeve (3) is longer than the core (2) at both ends of the hybrid pin (14).

2. Hybrid pin (14) according to Claim 1, **characterized in that** the light metal alloy is a wrought aluminium alloy, which contains, in addition to aluminium, 1.9 to 2.7% by mass copper, 1.3 to 1.8% by mass magnesium and 0.9 to 1.3% by mass iron, or a wrought titanium alloy.

3. Hybrid pin (14) according to Claim 1 or 2, **characterized in that** the sleeve (3) consists of steel.

4. Hybrid pin (14) according to Claim 3, **characterized in that** the steel is a nitrided steel with chromium, with molybdenum and with aluminium, a case-hardened steel or a quenched and tempered steel.

5. Hybrid pin (14a) according to one of the preceding claims, **characterized in that** the wall thickness of the sleeve (3a) is at its lowest in the axial centre of the sleeve (3a) and increases linearly towards the two ends of the sleeve (3a), such as to give rise to a radial, circumferential convexity of the interior of the sleeve (3a) which extends over the entire axial length of the sleeve (3a) and which decreases linearly towards the two ends of the sleeve (3a).

6. Hybrid pin (14b) according to one of Claims 1 to 4, **characterized in that** the wall thickness of the sleeve (3b) is at its lowest in the axial centre of the sleeve (3b) and increases like an arc, in section, towards the two ends of the sleeve (3b), such as to give rise to a radial, circumferential convexity of the interior of the sleeve (3b) which extends over the entire axial length of the sleeve (3b) and which decreases like an arc, in section, towards the two ends of the sleeve (3b).

7. Hybrid pin (14c) according to one of Claims 1 to 4, **characterized in that** the axially central part of the interior of the sleeve (3c) has a circular cylindrical form, and **in that** the two ends of the interior of the sleeve (3c) have circumferential convexities (17), which each have an axial centre from which the convexities (17) decrease linearly towards both sides.

8. Hybrid pin (14d) according to one of Claims 1 to 4, **characterized in that** the axially central part of the interior of the sleeve (3d) has a circular cylindrical form, and **in that** the two ends of the interior of the sleeve (3d) have circumferential convexities (18) in the form of an arc in section.

9. Hybrid pin (14e) according to one of Claims 1 to 4, **characterized in that** the interior of the sleeve (3e) has circumferential convexities (19) in the form of an arc in section, which are distributed uniformly over the entire axial length.

10. Hybrid pin (14f) according to one of Claims 1 to 4, **characterized in that** the interior of the sleeve (3f) has circumferential convexities (20), which are distributed uniformly over the entire axial length and which each have an axial centre from which the convexities (20) decrease linearly towards both sides.

11. Hybrid pin (14) according to one of Claims 1 to 10, **characterized in that** the inner surface of the sleeve (3) has a profile of spiral-shaped form.

12. Hybrid pin (14) according to one of Claims 1 to 10, **characterized in that** the inner surface of the sleeve (3) is coated with a suspension, wherein the suspension comprises microdispersed particles composed of diamond powder, of quartz sand or of SiO₂ with a size in the µm range.

13. Hybrid pin (14) according to one of Claims 1 to 10, **characterized in that** the central region of the sleeve (3h) has a profiled section (21).

14. Hybrid pin (14) according to one of Claims 1 to 10, **characterized in that** the inner surface of the sleeve (3) is roughened and has a roughness in the µm range.

15. Pressing apparatus (1') for producing a hybrid pin (14') for connecting a piston for an internal combustion engine to a connecting rod, wherein the hybrid pin (14') consists of a sleeve (3g) made of steel and of a core (2b) made of aluminium, said pressing apparatus consisting of a die (6') for receiving the sleeve (3g) with the core (2b) pushed into the sleeve (3g), of a punch (5) in contact with one side of the core (2b), and of a pressing punch (13) in contact with the other side of the core (2b), **characterized in that** the die (6') consists of two die halves (6'a, 6'b) which can be divided in the axial centre thereof, and has an interior (9') with a circumferential, radial convexity (16) extending over the entire axial length thereof, such that, by the exertion of pressure by the pressing punch (13) on the core (2b), not only can the core (2b) be pressed into the sleeve (3g), but also the axially central part of the sleeve (3g) can be radially widened.

16. Method for producing a hybrid pin (14') according to one of Claims 1 to 14, **characterized in that**, after the pressing operation, both the outer surface and the interior of the sleeve (3g) have a radial, circumferential convexity which extends over the entire axial length of the sleeve (3g) and which decreases like an arc, in section, towards the two ends of the sleeve (3g), and **in that**, after a subsequent cutting finishing process, the sleeve (3g) has a circular cylindrical outer surface (3b).

## Revendications

1. Goupille hybride (14) pour relier un piston pour un moteur à combustion interne à une bielle, dans laquelle la goupille hybride (14) se compose d'une douille (3) en acier avec une surface extérieure cylindrique circulaire et d'un noyau (2) serti dans la douille (3) en un alliage de métal léger déformable à froid, **caractérisée en ce que** la surface intérieure de la douille (3) présente un profil, dans lequel le diamètre intérieur de la douille (3) diminue vers les deux extrémités de la douille (3), empêchant ainsi, après le sertissage du noyau (2) dans la douille (3), un allongement élastique du noyau (2) dans la direction axiale, dans la mesure où la douille (3) est plus longue que le noyau (2) aux deux extrémités de la goupille hybride (14).

2. Goupille hybride (14) selon la revendication 1, **caractérisée en ce que** l'alliage de métal léger est un alliage d'aluminium forgé, qui contient en plus de l'aluminium 1,9 à 2,7 pour cent en masse de cuivre, 1,3 à 1,8 pour cent en masse de magnésium et 0,9 à 1,3 pour cent en masse de fer, ou un alliage de titane forgé.

3. Goupille hybride (14) selon la revendication 1 ou 2, **caractérisée en ce que** la douille (3) est constituée d'acier.

4. Goupille hybride (14) selon la revendication 3, **caractérisée en ce que** l'acier est un acier de nitruration avec du chrome, avec du molybdène et avec de l'aluminium, un acier de cémentation ou un acier de traitement.

5. Goupille hybride (14a) selon l'une quelconque des revendications précédentes, **caractérisée en ce que** l'épaisseur de paroi de la douille (3) est la plus faible au milieu axial de la douille (3) et augmente linéairement en direction des deux extrémités de la douille (3a), de telle manière qu'il en résulte un renflement radial périphérique de l'espace intérieur de la douille (3a), qui s'étend sur toute la longueur axiale de la douille (3a), et qui diminue linéairement en direction des deux extrémités de la douille (3a).

6. Goupille hybride (14b) selon l'une quelconque des revendications 1 à 4, **caractérisée en ce que** l'épaisseur de paroi de la douille (3b) est la plus faible au milieu axial de la douille (3b) et augmente en forme d'arc en coupe en direction des deux extrémités de la douille (3b), de telle manière qu'il en résulte un renflement radial périphérique de l'espace intérieur de la douille (3b), qui s'étend sur toute la longueur axiale de la douille (3b), et qui diminue en forme d'arc en coupe en direction des deux extrémités de la douille (3b).

7. Goupille hybride (14c) selon l'une quelconque des revendications 1 à 4, **caractérisée en ce que** la partie axialement centrale de l'espace intérieur de la douille (3c) est réalisée en forme de cylindre circulaire, et **en ce que** l'espace intérieur de la douille (3c) présente à ses deux extrémités des renflements périphériques (17), qui présentent respectivement un milieu axial, à partir duquel les renflements (17) diminuent linéairement en direction des deux côtés.

8. Goupille hybride (14d) selon l'une quelconque des revendications 1 à 4, **caractérisée en ce que** la partie axialement centrale de l'espace intérieur de la douille (3d) est réalisée en forme de cylindre circulaire, et **en ce que** l'espace intérieur de la douille (3d) présente à ses deux extrémités des renflements périphériques (18), qui ont en coupe la forme de segments de cercle.

9. Goupille hybride (14e) selon l'une quelconque des revendications 1 à 4, **caractérisée en ce que** l'espace intérieur de la douille (3e) présente des renflements périphériques (19) répartis uniformément sur la toute la longueur axiale, qui ont en coupe la forme de segments de cercle.

10. Goupille hybride (14f) selon l'une quelconque des revendications 1 à 4, **caractérisée en ce que** l'espace intérieur de la douille (3f) présente des renflements périphériques (20), répartis uniformément sur toute la longueur axiale, qui présentent respectivement un milieu axial, à partir duquel les renflements (20) diminuent linéairement en direction des deux côtés.

11. Goupille hybride (14) selon l'une quelconque des revendications 1 à 10, **caractérisée en ce que** l'espace intérieur de la douille (3) présente un profil, qui est configuré en forme de spirale.

12. Goupille hybride (14) selon l'une quelconque des revendications 1 à 10, **caractérisée en ce que** la surface intérieure de la douille (3) est revêtu avec une suspension, dans laquelle la suspension présente des particules finement réparties de poudre de diamant, de sable siliceux ou de SiO₂ avec une taille située dans le domaine des µm.

13. Goupille hybride (14) selon l'une quelconque des revendications 1 à 10, **caractérisée en ce que** la région centrale de la douille (3h) présente un profilage (21).

14. Goupille hybride (14) selon l'une quelconque des revendications 1 à 10, **caractérisée en ce que** la surface intérieure de la douille (3) est dépolie et présente une rugosité située dans le domaine des µm.

15. Dispositif de presse (1') pour la fabrication d'une goupille hybride (14') destinée à relier un piston pour un moteur à combustion interne à une bielle, dans laquelle la goupille hybride (14') se compose d'une douille (3g) en acier et d'un noyau (2b) en aluminium, se composant d'une matrice (6') destinée à recevoir la douille (3g) avec le noyau (2b) inséré dans la douille (3g), d'un poinçon (5) se trouvant en contact avec un premier côté du noyau (2b) et d'un poinçon de presse (13) se trouvant en contact avec l'autre côté du noyau (2b), **caractérisée en ce que** la matrice (6') se compose de deux moitiés de matrice (6'a, 6'b) séparables en leur milieu axial et présente un espace intérieur (9') avec un renflement radial périphérique (16) s'étendant sur toute sa longueur axiale, de telle manière que, par pression du poinçon de presse (13) sur le noyau (2b), le noyau (2b) puisse être pressé dans la douille (2g) et aussi que la partie axialement centrale de la douille (3g) puisse être élargie radialement.

16. Procédé pour la fabrication d'une goupille hybride (14') selon l'une quelconque des revendications 1 à 14, **caractérisé en ce que**, après l'opération de pressage, aussi bien la surface intérieure que l'espace intérieur de la douille (3g) présente un renflement radial périphérique, s'étendant sur toute la longueur axiale de la douille (3g), qui diminue en forme d'arc en coupe en direction des deux extrémités de la douille (3g), et **en ce que**, après une opération d'usinage finale par enlèvement de copeaux, la douille (3g) présente une surface extérieure cylindrique circulaire.
